# EUROPEAN PATENT APPLICATION

(11) **EP 2 952 245 A1**
(43) Date of publication of application: **09.12.2015**
(21) Application number: 15170096.0
(22) Date of filing: 01.06.2015
(51) Int. Cl.: B01D 53/94, B01J 37/08, B01J 21/04, B01J 23/63, B01J 37/02, F01N 3/10

(54) **EXHAUST GAS PURIFICATION CATALYST, METHOD OF PRODUCING THE SAME, AND EXHAUST GAS PURIFICATION METHOD USING THE SAME**

(30) Priority: 02.06.2014 JP 2014114305
(71) Applicant: Toyota Jidosha Kabushiki Kaisha, Toyota-shi, Aichi-ken 471-8571 (JP)
(72) Inventor: YAMAZAKI, Kiyoshi, Nagakute-shi, Aichi-ken, 480-1192 (JP); KATO, Chika, Nagakute-shi, Aichi-ken, 480-1192 (JP); KIKUGAWA, Masashi, Nagakute-shi, Aichi-ken, 480-1192 (JP); HAMAGUCHI, Tsuyoshi, Nagakute-shi, Aichi-ken, 480-1192 (JP); SOBUE, Yuichi, Aichi-ken,, 471-8571 (JP); SHINMYO, Yusuke, Aichi-ken,, 471-8571 (JP)
(74) Representative: Kuhnen & Wacker

(57) **Abstract**

An exhaust gas purification catalyst includes: a support formed of alumina and yttria; and platinum and palladium that are supported on the support. An yttria content in the support is 2 mass% to 15 mass%. A content ratio of the platinum to the palladium is in a range of 1 to 10 by mass ratio. At least a portion of the platinum and at least a portion of the palladium constitute a solid solution. A diffraction peak of a (311) plane of a crystal including the platinum, the palladium and the solid solution is present at 81.5° or higher in a range of 81.2° to 82.1°, the diffraction peak being identified by an X-ray diffraction method using CuKα rays.

## Description

### BACKGROUND OF THE INVENTION

### 1. Field of the Invention

The invention relates to an exhaust gas purification catalyst, a method of producing the same, and an exhaust gas purification method using the same.

### 2. Description of Related Art

In the related art, various kinds of exhaust gas purification catalysts have been studied in order to purify harmful components (for example, carbon monoxide (CO) and hydrocarbon (HC)) in gas exhausted from an internal combustion engine such as a diesel engine or a lean burn engine having low specific fuel consumption. As such an exhaust gas purification catalyst, an exhaust gas purification catalyst using various metal oxides as a support has been proposed.

As such an exhaust gas purification catalyst, for example, Japanese Patent Application Publication No. 9-308829 (JP 9-308829 A) discloses a diesel engine exhaust gas purification catalyst including catalyst components that contains: at least one element selected from the group consisting of platinum, ruthenium, rhodium, and palladium; praseodymium; and yttrium, in which the catalyst components are supported on a refractory support such as zirconia or alumina. However, in the diesel engine exhaust gas purification catalyst of the related art disclosed in JP 9-308829 A, oxidation activity to CO or HC at a low temperature is not necessarily sufficient.

In addition, Japanese Patent Application Publication No. 8-266865 (JP 8-266865 A) discloses a diesel engine exhaust gas purification catalyst including: a catalyst support layer that is formed of a refractory inorganic oxide such as alumina, silica, titania, zeolite, silica-alumina, or titania-alumina; and a platinum group element that is supported on the catalyst support layer, in which a composite oxide of vanadium with at least one of lanthanum, cerium, yttrium, and tungsten is further supported on the catalyst support layer. According to the description described in JP 8-266865 A, a diesel engine exhaust gas purification catalyst can be provided in which an ability to oxidize and decompose CO and the like can be maintained and improved, and concurrently production of SO₃ can be sufficiently suppressed. However, recently, the requirements for an exhaust gas purification catalyst have increased, and an exhaust gas purification catalyst capable of exhibiting sufficient oxidation activity to CO and HC at a low temperature is required.

### SUMMARY OF THE INVENTION

The invention has been made to provide an exhaust gas purification catalyst capable of exhibiting sufficiently high oxidation activity to CO and HC at a low temperature; a method of producing the same; and an exhaust gas purification method using the same.

The present inventors have found that oxidation activity to CO and HC at a low temperature can be sufficiently improved by adopting an exhaust gas purification catalyst in which a support is formed of alumina and a specific amount of yttria, platinum and palladium having a specific content ratio are supported on the support, and at least a portion of platinum and at least a portion of palladium form a solid solution.

An exhaust gas purification catalyst according to a first aspect of the invention includes: a support formed of alumina and yttria; and platinum and palladium that are supported on the support. An yttria content in the support is 2 mass% to 15 mass%. A content ratio of the platinum to the palladium is in a range of 1 to 10 by mass ratio. At least a portion of the platinum and at least a portion of the palladium constitute a solid solution. A diffraction peak of a (311) plane of a crystal including the platinum, the palladium and the solid solution is present at 81.5° or higher in a range of 81.2° to 82.1°, the diffraction peak being identified by an X-ray diffraction method using CuKα rays.

The reason why the exhaust gas purification catalyst according to the aspects of the invention can exhibit sufficiently high oxidation activity to CO and HC at a low temperature is not clear. The present inventors presumed the reason to be as follows. In the aspect of the invention, the support is formed of alumina and yttria, and the yttria content in the support is 2 mass% to 15 mass%. The present inventors presume that this support makes active species including platinum, palladium and alloy particles thereof highly dispersed, and prevents the alloy particles, which have the highest activity among the above active species, from being separated into platinum and palladium. As a result, the present inventors presume that the exhaust gas purification catalyst according to the aspect of the invention exhibits sufficiently high oxidation activity to CO and HC at a low temperature.

In the aspect of the invention, active particles including platinum, palladium, and alloy particles thereof are highly dispersed. Therefore, the number of active sites in a reaction is increased, and thus the catalytic activity is sufficiently high. In addition, since at least a portion of platinum and at least a portion of palladium constitute a solid solution, characteristics of active sites (activity per active site) in a reaction with CO, HC, or the like are improved. Further, the present inventors presume that platinum and palladium are in a metal state, and thus the active sites in the reaction with CO, HC, or the like exhibit activity even at a low temperature.

In the first aspect of the invention, an amount of base sites in the support may be 40 µmol-CO₂/g to 120 µmol-CO₂/g, the amount of base sites being obtained based on an amount of carbon dioxide desorbed per 1 g of the support in carbon dioxide temperature-programmed desorption. Furthermore, an amount of acidic sites in the support may be 150 µmol-NH₃/g or more, the amount of acidic sites being obtained based on an amount of ammonia desorbed per 1 g of the support in ammonia temperature-programmed desorption.

In the first aspect of the invention, a support amount of the platinum may be 0.1 parts by mass to 10 parts by mass in terms of metal with respect to 100 parts by mass of the support. Furthermore, a support amount of the palladium may be 0.01 parts by mass to 10 parts by mass in terms of metal with respect to 100 parts by mass of the support.

In the first aspect of the invention, the content ratio of the platinum to the palladium may be in a range of 2 to 8 by mass ratio.

In the first aspect of the invention, the content ratio of the platinum to the palladium may be in a range of 2 to 4 by mass ratio.

In the first aspect of the invention, a content ratio of the solid solution to a total amount of the platinum and the palladium may be 10 mass% to 90 mass%.

A second aspect of the invention is a method of producing an exhaust gas purification catalyst. The method includes: obtaining a support formed of alumina and yttria using alumina particles and an yttrium salt solution; supporting platinum and palladium on the support using at least one of a first solution and a combination of a second solution and a third solution, the first solution including a platinum salt and palladium salt, the second solution including a platinum salt, the third solution including a palladium salt; and firing the support, on which the platinum and the palladium are supported, in a temperature range of 700°C to 1000°C such that the fired support contains 2 mass% to 15 mass% of yttria, and a content ratio of the platinum to the palladium after the firing is in a range of 1 to 10 by mass ratio.

In the second aspect of the invention, the combination of the second solution and the third solution may be used when the platinum and the palladium are supported on the support. Furthermore, a platinum ion concentration in the second solution may be 0.0002 mol/L to 0.04 mol/L. Furthermore, a palladium ion concentration in the third solution may be 0.0002 mol/L to 0.04 mol/L.

An exhaust gas purification method according to a third aspect of the invention includes purifying exhaust gas exhausted from an internal combustion engine by bringing the exhaust gas into contact with the exhaust gas purification catalyst according to the first aspect of the invention.

According to the aspects of the invention, it is possible to provide an exhaust gas purification catalyst capable of exhibiting sufficiently high oxidation activity to CO and HC at a low temperature; a method of producing the same; and an exhaust gas purification method using the same.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a graph showing the 50% CO oxidation temperatures of exhaust gas purification catalysts obtained in Examples 1 to 3 of the invention and Comparative Examples 1 to 3;
FIG. 2 is a graph showing the 50% HC oxidation temperatures of the exhaust gas purification catalysts obtained in Examples 1 to 3 of the invention and Comparative Examples 1 to 3;
FIG. 3 is a graph showing the particle sizes of noble metal (platinum and palladium and/or a solid solution thereof) of the exhaust gas purification catalysts obtained in Examples 1 to 3 of the invention and Comparative Examples 1 to 3;
FIG. 4 is a graph showing the amounts of base sites of the exhaust gas purification catalysts obtained in Examples 1 to 3 of the invention and Comparative Examples 1 to 3, the amounts of base sites being obtained based on the amount of carbon dioxide desorbed per 1 g of the support in carbon dioxide temperature-programmed desorption; and
FIG. 5 is a graph showing the amounts of acidic sites of the exhaust gas purification catalysts obtained in Examples 1 to 3 of the invention and Comparative Examples 1 to 3, the amounts of acidic sites being obtained based on the amount of ammonia desorbed per 1 g of the support in ammonia temperature-programmed desorption.

### DETAILED DESCRIPTION OF EMBODIMENTS

Hereinafter, the invention will be described in detail using preferred embodiments thereof.

### (Support)

In an exhaust gas purification catalyst according to an embodiment of the invention, a support is formed of alumina (Al₂O₃) and yttria (Y₂O₃), in which an yttria content in the support is necessarily 2 mass% to 15 mass%. When the yttria content is below the lower limit, platinum, palladium, and alloy particles thereof as a noble metal cannot be made to be highly dispersed. On the other hand, when the yttria content exceeds the upper limit, it is difficult to make the noble metal to be in a metal state. From the viewpoints of simultaneously realizing high dispersibility and metalation, the yttria content is more preferably 3 mass% to 14 mass% and still more preferably 3.5 mass% to 12 mass%.

Here, "the support formed of alumina and yttria" represents a support containing only alumina and yttria or a support containing alumina and yttria as a major component and further containing other components within a range where the effects of the invention are not impaired. As the other components, for example, various other metal oxides or additives which can be used in a support for the above-described application can be used. When the support contains components other than alumina and yttria, the content of alumina and yttria in the support is preferably 50 mass% or more and more preferably 80 mass% or more with respect to 100 mass% of the total mass of the support. When the content of alumina and yttria in the support is below the lower limit, the effects of the embodiment of the invention are not sufficiently obtained.

Alumina (Al₂O₃) in the support may be at least one alumina selected from the group consisting of boehmite alumina, pseudo-boehmite alumina, χ-alumina, κ-alumina, p-alumina, η-alumina, γ-alumina, pseudo-γ-alumina, δ-alumina, θ-alumina, and α-alumina. From the viewpoint of heat resistance, α-alumina, γ-alumina, or θ-alumina is preferably used, and γ-alumina or θ-alumina having high activity is more preferably used.

In addition, the metal oxides used as the other components contained in the support are not particularly limited as long as they can be used in the support of the exhaust gas purification catalyst. From the viewpoints of the heat stability and the catalytic activity of the support, for example, oxides of metals, mixtures of the oxides of the metals, solid solutions of the oxides of the metals, and composite oxides of the metals can be appropriately used, the metals including: rare earth metals such as lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), magnesium (Mg), calcium (Ca), strontium (Sr), barium (Ba), scandium (Sc), and vanadium (V); alkali metals; alkali earth metals; and transition metals.

In addition, the shape of the support of the exhaust gas purification catalyst according to the embodiment of the invention is not particularly limited and may be a well-known shape of the related art such as a ring shape, a spherical shape, a cylindrical shape, a particle shape, or a pellet shape. It is preferable that the support has a particle shape from the viewpoint of containing a large amount of Pt and Pd in a state having high dispersibility. When the support has a particle shape, the average particle size of the support is preferably 0.5 µm to 10 µm.

Further, the specific surface area of the support is not particularly limited, but is preferably 5 m²/g to 300 m²/g and more preferably 10 m²/g to 200 m²/g. When the specific surface area is below the lower limit, the dispersibility of Pt and Pd is decreased, and thus the catalytic performance (oxidation activity to CO and HC at a low temperature) decreases. On the other hand, when the specific surface area exceeds the upper limit, particles grow easily even at a low temperature of 700°C or lower, which promotes the growth of noble metal particles supported on the support. Therefore, the catalytic performance decreases. The specific surface area can be calculated from an adsorption isotherm as a BET specific surface area using a BET isotherm adsorption equation. This BET specific surface area can be obtained using a commercially available apparatus.

Further, a method of producing the support is not particularly limited, and a well-known method can be appropriately adopted. Further, as such a support, a commercially available product may be used.

### (Platinum and Palladium)

Next, in the exhaust gas purification catalyst according to the embodiment of the invention, platinum (Pt) and palladium (Pd) are supported on the support. The support amount of platinum (Pt) is preferably 0.1 parts by mass to 10 parts by mass in terms of metal with respect to 100 parts by mass of the support. When the support amount of platinum is below the lower limit, sufficiently high oxidation activity to CO and HC at a low temperature cannot be obtained. On the other hand, when the support amount of platinum exceeds the upper limit, sintering of platinum is likely to occur, and the dispersion degree of platinum decreases, which is disadvantageous from the viewpoints of efficiency in the use of noble metal and the cost. In addition, the support amount of platinum is more preferably 0.5 parts by mass to 6 parts by mass from the viewpoints of catalytic performance and cost. The particle size (average particle size) of platinum supported on the support is preferably 1 nm to 100 nm (more preferably 2 nm to 50 nm). When the particle size of platinum is below the lower limit, it is difficult to make platinum to be in a metal state. On the other hand, when the particle size of platinum exceeds the upper limit, the amount of active sites significantly decreases.

The support amount of palladium (Pd) is preferably 0.01 parts by mass to 10 parts by mass in terms of metal with respect to 100 parts by mass of the support. When the support amount of palladium is below the lower limit, high oxidation activity to CO and HC at a low temperature cannot be sufficiently obtained. On the other hand, when the support amount of palladium exceeds the upper limit, there are disadvantageous effects from the viewpoints of efficiency in the use of noble metal and the cost. In addition, the support amount of palladium is more preferably 0.1 parts by mass to 6 parts by mass from the viewpoints of catalytic performance and cost. This palladium may be supported as an oxide. The particle size (average particle size) of palladium supported on the support is preferably 1 nm to 100 nm (more preferably 2 nm to 50 nm). When the particle sizes are below the lower limits, characteristics of active sites (activity per active site) decrease. On the other hand, when the particle sizes exceed the upper limits, the amount of active sites significantly decreases.

Further, a state where palladium is supported on the support is not particularly limited, but it is preferable that palladium is supported closer to the support than platinum. By supporting palladium closer to the support than platinum, a highly active alloy of platinum and palladium is formed with high efficiency, and particles of the alloy of platinum and palladium are not likely to grow.

In the exhaust gas purification catalyst according to the embodiment of the invention, a content ratio (mass ratio; [platinum]:[palladium]) of platinum to palladium is necessarily in a range of 1:1 to 10:1. When the content ratio of platinum is below the lower limit (that is, when the content ratio of palladium exceeds the upper limit), high oxidation activity to CO and HC at a low temperature cannot be sufficiently obtained. On the other hand, when the content ratio of platinum exceeds the upper limit (that is, when the content ratio of palladium is below the lower limit), it is difficult to form an alloy of platinum and palladium capable of obtaining high activity and suppressing the growth of particles. From the viewpoint of forming the alloy of platinum and palladium, the content ratio of platinum to palladium is preferably in a range of 2:1 to 8:1 and more preferably in a range of 2:1 to 4:1.

In the exhaust gas purification catalyst according to the embodiment of the invention, at least a portion of platinum and at least a portion of palladium necessarily form a solid solution. By adjusting platinum and palladium to be in a solid solution state, characteristics of active sites (activity per active site) in a reaction with CO, HC, or the like are improved. Such a solid solution can be produced, for example, by performing a heat treatment on the catalyst, in which platinum and palladium are supported, at 700°C or higher. In addition, the presence of the solid solution can be verified by measuring a peak derived from a (311) plane of a crystal including platinum, palladium, and a solid solution thereof using the same method as that of the X-ray diffraction measurement for measuring the particle sizes of platinum and palladium so as to obtain a lattice constant. Further, when the X-ray diffraction measurement is performed on the solid solution, the amount of the solid solution of platinum and palladium can be obtained from a change of the lattice constant according to Vegard's law. The amount of the solid solution of platinum and palladium obtained as described above is preferably 10 mass% to 90 mass% with respect to the total amount of platinum and palladium. In either case where the amount of the solid solution is below the lower limit or exceeds the upper limit, characteristics of active sites (activity per active site) in a reaction with CO, HC, or the like cannot be sufficiently improved. Due to the same reasons as described above, the particle size (average particle size) of the solid solution is preferably 1 nm to 100 nm (more preferably 2 nm to 50 nm).

In the exhaust gas purification catalyst according to the embodiment of the invention, a diffraction peak derived from a (311) plane of a crystal including platinum, palladium, and a solid solution of the platinum and the palladium is necessarily present at 81.5° or higher in a range of 81.2° to 82.1°. The diffraction peak is identified by an X-ray diffraction method using CuKα rays. By the diffraction peak being present at 81.5° or higher, the solid solution of platinum and palladium can be sufficiently formed. When the solid solution of platinum and palladium is not sufficiently formed, the diffraction peak is present at lower than 81.5°.

In the exhaust gas purification catalyst according to the embodiment of the invention, the amount of base sites in the support is 40 µmol-CO₂/g to 120 µmol-CO₂/g, the amount of base sites being obtained based on an amount of carbon dioxide desorbed per 1 g of the support in carbon dioxide temperature-programmed desorption, and the amount of acidic sites in the support is 150 µmol-NH₃/g or more, the amount of acidic sites being obtained based on an amount of ammonia desorbed per 1 g of the support in ammonia temperature-programmed desorption. When the amount of base sites is below the lower limit, it is difficult to make the noble metal to be highly dispersed. On the other hand, when the amount of base sites exceeds the upper limit, it is difficult to make the noble metal to be in a metal state. From the viewpoints of simultaneously realizing the high dispersibility and metalation of the noble metal, the amount of base sites in the support is preferably 60 µmol-CO₂/g to 100 µmol-CO₂/g. In addition, when the amount of acidic sites in the support is below the lower limit, it is difficult to make the noble metal to be in a metal state. From the viewpoints of simultaneously realizing the high dispersibility and metalation of the noble metal, the amount of acidic sites in the support is preferably 150 µmol-NH₃/g to 250 µmol-NH₃/g.

As a method of measuring the amount of base sites, the following carbon dioxide (CO₂) temperature-programmed desorption can be adopted. That is, first, gas containing O₂ and N₂ (or gas containing O₂ and He) is supplied to a catalyst support at about 600°C. Next, the temperature is decreased to about 100°C, and gas containing CO₂ and N₂ (or gas containing CO₂ and He) is supplied to the catalyst support such that CO₂ is adsorbed on the support. Next, N₂ gas (or gas containing He) is supplied to the support while increasing the temperature to about 600°C at a temperature increase rate of 10°C/min such that CO₂ is desorbed from the support, and the amount of CO₂ desorbed is measured. In order to measure the gas concentration, a commercially available catalyst evaluation device (for example, "CATA-5000" manufactured by Best Sokki, Ltd. and "MEXA-4300FT" manufactured by Horiba Ltd.) can be used. The amount of CO₂ desorbed per 1 g of the catalyst support which is measured as described above is obtained as the amount of base sites according to the embodiment of the invention.

As a method of measuring the amount of acidic sites, the following ammonia (NH₃) temperature-programmed desorption can be adopted. That is, first, gas containing O₂ and N₂ (or gas containing O₂ and He) is supplied to a catalyst support at about 600°C. Next, the temperature is decreased to about 100°C, and gas containing NH₃ and N₂ (or gas containing NH₃ and He) is supplied to the catalyst support such that NH₃ is adsorbed on the support. Next, N₂ gas (or gas containing He) is supplied to the support while increasing the temperature to about 600°C at a temperature increase rate of 10°C/min such that NH₃ is desorbed from the support, and the amount of NH₃ desorbed is measured. In order to measure the gas concentration, a commercially available catalyst evaluation device (for example, "CATA-5000" manufactured by Best Sokki, Ltd. and "MEXA-4300FT" manufactured by Horiba Ltd.) can be used. The amount of NH₃ desorbed per 1 g of the catalyst support which is measured as described above is obtained as the amount of acidic sites according to the embodiment of the invention.

The form of the exhaust gas purification catalyst according to the embodiment of the invention is not particularly limited. For example, the exhaust gas purification catalyst may adopt a form of a honeycomb-shaped monolith catalyst or a pellet-shaped pellet catalyst. Further, the exhaust gas purification catalyst may adopt a form in which a powdered catalyst is disposed at a target position as it is. A method of producing the exhaust gas purification catalyst having the above-described form is not particularly limited, and a well-known method can be appropriately used. For example, a method of forming a catalyst into a pellet shape to obtain a pellet-shaped exhaust gas purification catalyst or a method of coating a catalyst substrate with a catalyst to obtain an exhaust gas purification catalyst having a form in which the catalyst substrate is coated (fixed) with the catalyst may be appropriately adopted. The catalyst substrate is not particularly limited. For example, the catalyst substrate can be appropriately selected according to the use and the like of the obtained exhaust gas purification catalyst, and a monolith substrate, a pellet-shaped substrate, a plate-shaped substrate, or the like is preferably adopted. In addition, a material of the catalyst substrate is not particularly limited. For example, a substrate formed of a ceramic such as cordierite, silicon carbide, or mullite or a substrate formed of a metal such as stainless steel containing chromium and aluminum is preferably adopted. Further, the exhaust gas purification catalyst according to the embodiment of the invention may be used in combination with other catalysts. The other catalysts are not particularly limited, and well-known catalysts (for example, an oxidation catalyst, a NOx reduction catalyst, or a NOx storage reduction catalyst (NSR catalyst)) may be appropriately used.

### [Method of Producing Exhaust Gas Purification Catalyst]

Next, a method of producing the exhaust gas purification catalyst according to the embodiment of the invention will be described. The method of producing the exhaust gas purification catalyst according to the embodiment of the invention includes: a step (support preparing step) of obtaining a support formed of alumina and yttria using alumina particles and an yttrium salt solution; a step (active metal supporting step) of causing platinum and palladium to be supported on the support using a solution of a platinum salt and a palladium salt; and a step (firing step) of obtaining the exhaust gas purification catalyst according to the embodiment of the invention by firing the support, on which platinum and palladium are supported, in a temperature range of 700°C to 1000°C. Using the method, the exhaust gas purification catalyst according to the embodiment of the invention can be produced which is capable of exhibiting sufficiently high oxidation activity to CO and HC at a low temperature. The solution of the platinum salt and the palladium salt may be regarded as: a solution including a platinum salt and palladium salt; and/or a combination of a solution including a platinum salt and a solution including a palladium salt.

In the method of producing the exhaust gas purification catalyst according to the embodiment of the invention, first, a support formed of alumina and yttria is obtained using alumina particles and an yttrium salt solution (support preparing step).

The alumina particles used in the support preparing step of the method according to the embodiment of the invention is not particularly limited. The alumina particles may be alumina obtained by a well-known alumina production method, or a commercially available alumina. Examples of the alumina production method include a method of obtaining alumina by adding ammonia water to an aluminum nitrate solution to be neutralized and to obtain a precipitate, firing the precipitate at about 500°C to 1200°C for about 0.5 hours to 10 hours, and dry-pulverizing the fired precipitate.

In addition, the particle size (average particle size) of the alumina particles is preferably 0.5 µm to 100 µm and more preferably 1 µm to 10 µm. When the average particle size of the alumina particles is below the lower limit, particles of the support are likely to grow. On the other hand, when the average particle size of the alumina particles exceeds the upper limit, the noble metal is not supported with high dispersibility. Further, the specific surface area of the alumina particles is preferably 5 m²/g to 300 m²/g and more preferably 10 m²/g to 200 m²/g. When the specific surface area is below the lower limit, the dispersion degree of the active metal decreases, and it is difficult to obtain sufficient activity. On the other hand, when the specific surface area exceeds the upper limit, particles of the support are likely to grow.

Next, the yttrium salt solution used in the support preparing step of the method according to the embodiment of the invention is not particularly limited, and examples thereof include solutions of an yttrium salt or a complex thereof, for example, a nitrate, a sulfate, a halide (for example, a fluoride or a chloride), an acetate, a carbonate, or a citrate of yttrium (Y). Among these, a solution of a nitrate or a citric acid complex of yttrium (Y) is preferable from the viewpoint of uniform supporting on the support. In addition, the solvent is not particularly limited, and examples thereof include water (preferably, pure water such as ion exchange water or distilled water). The concentration of the yttrium salt solution is not particularly limited, and the yttrium (Y) ion concentration is preferably 0.01 mol/L to 1.0 mol/L.

Further, a method of obtaining the support formed of alumina and yttria using the alumina particles and the yttrium salt solution is not particularly limited. For example, a well-known method can be appropriately adopted, the well-known method including: a method impregnating the alumina particles with the yttrium salt solution; and a method of adsorbing the yttrium salt solution to the alumina particles to be supported thereon. In addition, when the yttrium salt solution is brought into contact with the alumina particles, the support amount of yttrium supported on the alumina particles in the yttrium salt solution is preferably 0.02 mol/g to 0.25 mol/g and more preferably 0.03 mol/g to 0.20 mol/g in terms of metal ([the molar number of yttrium in the aqueous solution]/[the mass of the alumina particles]). When the support amount of yttrium is below the lower limit, the dispersibility of the noble metal decreases. When the support amount of yttrium exceeds the upper limit, the metalation of the noble metal is difficult.

Next, in the method of producing the exhaust gas purification catalyst according to the embodiment of the invention, platinum (Pt) and palladium (Pd) are supported on the support, which is obtained in the support preparing step, using, for example, a solution of a platinum salt and a solution of a platinum salt a palladium salt (active metal supporting step).

The solution of the platinum salt and the solution of the palladium salt used in the active metal supporting step of the method according to the embodiment of the invention are not particularly limited. Examples of the platinum salt include acetates, carbonates, nitrates, ammonium salts, citrates, and dinitro diammine salts of platinum (Pt) and complexes thereof. Among these, dinitro diammine salts of platinum are preferable from the viewpoints of ease of supporting and high dispersibility. The palladium salt is not particularly limited, and examples thereof include acetates, carbonates, nitrates, ammonium salts, citrates, and dinitro diammine salts of palladium (Pd) and complexes thereof. Among these, nitrates or dinitro diammine salts of palladium are preferable from the viewpoints of ease of supporting and high dispersibility. Further, the solvent is not particularly limited, and examples thereof include solvents, such as water (preferably, pure water such as ion exchange water or distilled water), in which a platinum salt and a palladium salt can be ionically dissolved. The concentration of the solution of the platinum salt and the solution of the palladium salt are not particularly limited, and each of the platinum ion concentration and the palladium ion concentration is preferably 0.0002 mol/L to 0.04 mol/L.

In addition, the method of supporting platinum (Pt) and palladium (Pd) on the support using the solution of the platinum salt and the solution of the palladium salt is not particularly limited, and a well-known method can be appropriately adopted, the well-known method including: a method of impregnating the support with the solution of the platinum salt and the solution of the palladium salt; and a method of adsorbing the solution of the platinum salt and the solution of the palladium salt to the support to be supported thereon. Further, when the solution of the platinum salt and the solution of the palladium salt are supported on the support, each of the support amounts of platinum and palladium supported on the alumina particles is preferably 0.1 parts by mass to 20 parts by mass and more preferably 0.5 parts by mass to 12 parts by mass in terms of metal with respect to 100 parts by mass of the support. When each of the support amounts of platinum and palladium is below the lower limit, high oxidation activity to CO and HC at a low temperature cannot be sufficiently obtained. On the other hand, when the support amount of platinum or the support amount of palladium exceeds the upper limit, there are disadvantageous effects from the viewpoints of efficiency in the use of noble metal and cost. From the viewpoints of catalytic performance and cost, the support amount of platinum is preferably 0.1 parts by mass to 10 parts by mass and more preferably 0.5 parts by mass to 6 parts by mass in terms of metal with respect to 100 parts by mass of the support. From the viewpoints of catalytic performance and cost, the support amount of palladium is preferably 0.01 parts by mass to 10 parts by mass and more preferably 0.1 parts by mass to 6 parts by mass in terms of metal with respect to 100 parts by mass of the support.

Next, in the method of producing the exhaust gas purification catalyst according to the embodiment of the invention, the exhaust gas purification catalyst according to the embodiment of the invention is obtained by firing the support (active metal-supported support), on which platinum and palladium are supported, in a temperature range of 700°C to 1000°C, the support being obtained in the active metal supporting step (firing step).

In the firing step of the method of producing the exhaust gas purification catalyst according to the embodiment of the invention, it is preferable that the support (active metal-supported support) on which platinum and palladium are supported is fired in a temperature range of 700°C to 1000°C. When the firing temperature is below the lower limit, the solid solution of platinum and palladium supported on the exhaust gas purification catalyst is not formed, and thus sufficiently high oxidation activity to CO and HC at a low temperature cannot be exhibited. On the other hand, when the firing temperature exceeds the upper limit, it is difficult to support the solid solution on the support with high dispersibility. From the viewpoints of forming the solid solution and obtaining high dispersibility, the firing temperature is preferably in a range of 750°C to 900°C and more preferably in a range of 750°C to 850°C. In addition, the firing (heating) time is preferably 3 hours to 20 hours and more preferably 4 hours to 15 hours although this varies depending on the firing temperature. Further, an atmosphere in the firing step is not particularly limited, but is preferably air or an inert gas such as nitrogen (N₂).

### [Exhaust Gas Purification Method]

Next, an exhaust gas purification method according to an embodiment of the invention will be described. The exhaust gas purification method according to the embodiment of the invention includes: purifying exhaust gas exhausted from an internal combustion engine by bringing the exhaust gas into contact with the exhaust gas purification catalyst according to the embodiment of the invention.

In the exhaust gas purification method according to the embodiment of the invention, a method of bringing exhaust gas into contact with the exhaust gas purification catalyst is not particularly limited, and a well-known method can be appropriately used. For example, a method may be adopted, the method including: bringing exhaust gas exhausted from an internal combustion engine into contact with the exhaust gas purification catalyst according to the invention by disposing the exhaust gas purification catalyst inside an exhaust gas pipe through which gas exhausted from an internal combustion engine flows.

The exhaust gas purification catalyst according to the embodiment of the invention used in the exhaust gas purification method according to the embodiment of the invention exhibits sufficiently high oxidation activity to CO and HC at a low temperature. Therefore, by bringing exhaust gas exhausted from an internal combustion engine such as a diesel engine into contact with the exhaust gas purification catalyst according to the embodiment of the invention, CO and HC in the exhaust gas can be sufficiently purified. From this point of view, the exhaust gas purification method according to the embodiment of the invention can be suitably adopted, for example, as a method of purifying CO and HC in exhaust gas exhausted from an internal combustion engine such as a diesel engine.

Hereinafter, the embodiment of the invention will be described in more detail using Examples and Comparative Examples but is not limited to the following Examples.

### (Example 1)

First, in order to prepare an yttrium salt solution, 34.6 g (0.18 mol) of citric acid (manufactured by Wako Pure Chemical Industries Ltd.; special grade) was dissolved in 34 g of ion exchange water, 20.3 g (0.06 mol) of yttrium acetate tetrahydrate (manufactured by Wako Pure Chemical Industries Ltd.) was added thereto, and the obtained solution was stirred at room temperature (25°C) for about six hours. As a result, an yttrium acetate complex aqueous solution was prepared. Next, using the obtained yttrium acetate complex aqueous solution, yttrium was supported on 150 g of alumina powder (MI307, manufactured by W. R. Grace & Co.-Conn.) in a support amount corresponding to 0.05 mol of yttrium. The alumina powder was dried using a rotary evaporator and was fired in air at a temperature of 800°C for five hours. As a result, an yttria surface-modified alumina support was obtained.

Next, using a dinitro diammine platinum nitrate aqueous solution (0.014 mol/L) and a palladium nitrate aqueous solution (0.0063 mol/L), platinum and palladium were impregnated and supported on the obtained yttria surface-modified alumina support such that the support amount of platinum was 5.4 g and the support amount of palladium was 1.35 g with respect to 150 g of the alumina powder. Next, the support was fired in air at 550°C for 2 hours and then further fired in air at 750°C for 5 hours. As a result, an exhaust gas purification catalyst (powder) was obtained.

### (Example 2)

An yttria surface-modified alumina support was prepared by the same procedure as that of Example 1, except that, using the yttrium acetate complex aqueous solution, yttrium was supported on the alumina powder in a support amount corresponding to 0.10 mol of yttrium. Using the obtained yttria surface-modified alumina support, an exhaust gas purification catalyst was obtained by the same procedure as that of Example 1.

### (Example 3)

An yttria surface-modified alumina support was prepared by the same procedure as that of Example 1, except that, using the yttrium acetate complex aqueous solution, yttrium was supported on the alumina powder in a support amount corresponding to 0.20 mol of yttrium. Using the obtained yttria surface-modified alumina support, an exhaust gas purification catalyst was obtained by the same procedure as that of Example 1.

### (Comparative Example 1)

Using a dinitro diammine platinum nitrate solution and a palladium nitrate solution, platinum and palladium were supported on 150 g of alumina powder (MI307, manufactured by W. R. Grace & Co.-Conn.) such that the support amounts of platinum and palladium were as shown in Table 1. Next, the support was fired in air at 550°C for 2 hours and then further fired in air at 750°C for 5 hours. As a result, a comparative catalyst was obtained.

### (Comparative example 2)

First, 34.6 g (0.18 mol) of citric acid (manufactured by Wako Pure Chemical Industries Ltd.; special grade) was dissolved in 34 g of ion exchange water, 20.3 g (0.06 mol) of yttrium acetate tetrahydrate (manufactured by Wako Pure Chemical Industries Ltd.) was added thereto, and the obtained solution was stirred at room temperature (25°C) for about six hours. As a result, an yttrium acetate complex aqueous solution was prepared. Next, using the obtained yttrium acetate complex aqueous solution, yttrium was supported on 150 g of alumina powder (MI307, manufactured by W. R. Grace & Co.-Conn.) in a support amount corresponding to 0.10 mol of yttrium. The alumina powder was dried using a rotary evaporator and was fired in air at a temperature of 800°C for five hours. As a result, an yttria surface-modified alumina support was obtained. Next, using a dinitro diammine platinum nitrate aqueous solution (0.014 mol/L) and a palladium nitrate aqueous solution (0.0063 mol/L), platinum and palladium were impregnated and supported on the obtained yttria surface-modified alumina support such that the support amount of platinum was 5.4 g and the support amount of palladium was 1.35 g with respect to 150 g of the alumina powder. Next, the support was fired in air at 550°C for 2 hours and then further fired in air at 550°C for 5 hours. As a result, a comparative catalyst was obtained.

### (Comparative Example 3)

An yttria surface-modified alumina support was prepared by the same procedure as that of Example 1, except that, using the yttrium acetate complex aqueous solution, yttrium was supported on the alumina powder in a support amount corresponding to 0.30 mol of yttrium. Using the obtained yttria surface-modified alumina support, a comparative catalyst was obtained by the same procedure as that of Example 1.

Regarding the exhaust gas purification catalysts obtained in Examples 1 to 3 and the comparative catalysts obtained in Comparative Examples 1 to 3, the yttria content (mass%) in the support, the support amounts (g) of platinum and palladium per 100 g of alumina, and the content ratio of platinum to palladium are shown in Table 1.

**[Table 1]**

| | Yttria Content (mass%) | Support Amount (g) per 100 g of Alumina | | Platinum:Palladium (Mass Ratio) | Diffraction Peak Derived From (311) Plane |
|---|---|---|---|---|---|
| | | Pt | Pd | | |
| Example 1 | 3.63 | 3.6 | 0.9 | 4:1 | 81.57 |
| Example 2 | 7.00 | 3.6 | 0.9 | 4:1 | 81.58 |
| Example 3 | 13.08 | 3.6 | 0.9 | 4:1 | 81.58 |
| Comparative Example 1 | 0.00 | 3.6 | 0.9 | 4:1 | 81.57 |
| Comparative Example 2 | 7.00 | 3.6 | 0.9 | 4:1 | 81.28 |
| Comparative Example 3 | 18.42 | 3.6 | 0.9 | 4:1 | 81.37 |

### [Evaluation of Properties of Catalysts Obtained in Examples 1 to 3 and Comparative Examples 1 to 3]

### <Activity Evaluation Test>

Regarding the exhaust gas purification catalyst obtained in Example 1 to 3 and the comparative catalysts obtained in Comparative Examples 1 to 3, the oxidation performance of each catalyst was measured.

In such an oxidation performance measurement test, first, using a fixed bed flow reactor, the following treatment (pre-treatment) was performed in which: a quartz reaction tube having an inner diameter of 15 mm was filled with a catalyst containing 1 g of aluminum oxide powder; the temperature of intake gas flowing to the catalyst was increased to 300°C at a temperature increase rate of 10°C/min while supplying model gas containing CO₂ (10 vol%), O₂ (10 vol%), CO (800 ppm), C₃H₆ (400 ppmC), NO (100 ppm), H₂O (5 vol%), and N₂ (balance) to the catalyst at a flow rate of 10 L/min; and the quartz reaction tube was heated at 300°C for 5 minutes and then cooled until the bed temperature of the catalyst (the temperature of intake gas flowing to the catalyst) was 100°C.

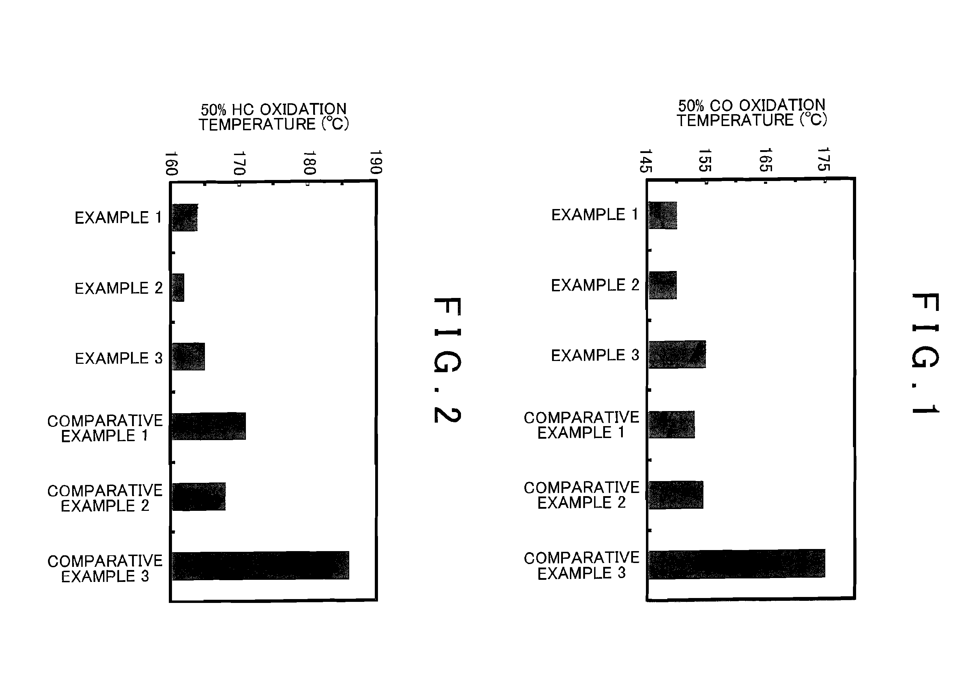

Next, after the pre-treatment, the temperature of intake gas flowing to the catalyst was increased from 100°C to 300°C at a temperature increase rate of 10°C/min while supplying the model gas to the catalyst at a flow rate of 10 L/min. During this temperature increase, the CO concentration of gas emitted from the catalyst (gas emitted from the quartz reaction tube after contact with catalyst) was measured using a continuous gas analyzer, and a CO conversion (oxidation) ratio was calculated from the CO concentration in the model gas and the CO concentration in the emitted gas. At this time, a temperature at which the CO conversion (oxidation) ratio reached 50% was obtained as a 50% CO oxidation temperature (°C). Likewise, a temperature at which the HC (C₃H₆) conversion (oxidation) ratio reached 50% was obtained as a 50% HC oxidation temperature (°C). FIG. 1 is a graph showing the 50% CO oxidation temperatures of the exhaust gas purification catalysts obtained in Examples 1 to 3 and Comparative Examples 1 to 3. In addition, FIG. 2 is a graph showing the 50% HC oxidation temperatures of the exhaust gas purification catalysts obtained in Examples 1 to 3 and Comparative Examples 1 to 3.

As clearly seen from the results shown in Table 1 and FIGS. 1 and 2, it was verified that the exhaust gas purification catalysts of Examples 1 to 3 exhibited high CO oxidation activity and high HC oxidation activity at the 50% CO oxidation temperature and the 50% HC oxidation temperature. It was verified that the exhaust gas purification catalysts of Examples 1 and 2 exhibited higher CO oxidation activity and higher HC oxidation activity than those of Comparative Examples 1 to 3. It was verified that the exhaust gas purification catalyst of Example 3 exhibited higher HC oxidation activity than that of Comparative Examples and exhibited high CO oxidation activity and HC oxidation activity.

### <Measurement of Solid Solution State of Platinum and Palladium: X-Ray Diffraction Measurement>

Regarding the exhaust gas purification catalysts obtained in Examples 1 to 3 and the comparative catalysts obtained in Comparative Examples 1 to 3, an X-ray diffraction (XRD) pattern was measured using a powder X-ray diffractometer ("RINT-TTR" manufactured by Rigaku Corporation) under conditions of a scan step of 0.01°, a divergence slit of 2/3°, a receiving slit of 8 mm, CuKα rays, 40 kV, 40 mA, and a scan speed of 10°/min. In addition, a value of diffraction peak (2θ) present in a range of 81.2° to 82.1° derived from a (311) crystal plane of platinum, palladium, and the solid solution . The obtained results are shown in Table 1.

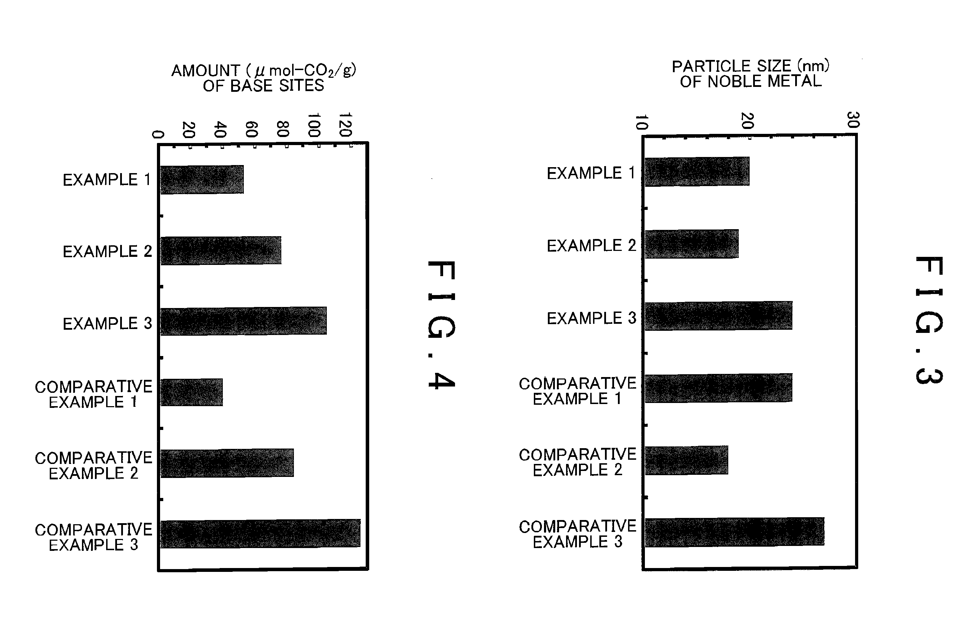

Next, regarding the exhaust gas purification catalysts obtained in Examples 1 to 3 and the comparative catalysts obtained in Comparative Examples 1 to 3, the particle size (average particle size) of the noble metal (platinum and palladium and/or a solid solution thereof) was measured by calculation from the full width at half maximum of the diffraction peak derived from the (311) crystal plane according to Scherrer's equation. The obtained results are shown in FIG. 3.

As clearly seen from the results of Table 1 and FIG. 3, it was verified that the particle sizes of the noble metal (platinum, palladium, and a solid solution thereof) of the exhaust gas purification catalysts obtained in Examples 1 to 3 were less than or equal to those of Comparative Examples 1 and 3.

On the other hand, the comparative catalyst of Comparative Example 2 has the smallest particle size of the noble metal. However, as shown in Table 1, it was verified that, in the catalyst of Comparative Example 2, the diffraction peak derived from the (311) crystal plane was lower than 81.5°, and the solid solubility between platinum and palladium was low.

Accordingly, it was verified that the CO oxidation activity and the HC oxidation activity of the exhaust gas purification catalysts of Examples 1 to 3 were high because the solid solubility between platinum and palladium was high and the particle sizes thereof were small.

In addition, it was verified from the performance evaluation test results of the exhaust gas purification catalysts of Examples 1 to 3 that, when the yttria content in the support is in a range of 2 wt% to 15 wt%, and when the diffraction peak derived from a (311) crystal plane is 81.5° or higher, an exhaust gas purification catalyst having high oxidation activity to CO and HC at a low temperature can be obtained.

### <Measurement of Amount of Base Sites and Amount Of Acidic Sites>

Regarding the exhaust gas purification catalysts obtained in Examples 1 to 3 and the comparative catalysts obtained in Comparative Examples 1 to 3, the amount of base sites and the amount of acidic sites were measured.

In a method of measuring the amount of base sites, first, 1 g of a support was prepared as a measurement sample. Next, using a temperature-programmed desorption apparatus (TP5000, manufactured by Hemmi Slide Rule Co., Ltd.), the temperature was increased to 600°C at a temperature increase rate of 40°C/min while supplying model gas for the pre-treatment shown in Table 2 to the measurement sample. Next, after the gas temperature reached 600°C, the gas temperature was held at 600°C for 20 minutes while supplying the model gas for the pre-treatment to the measurement sample such that the model gas was brought into contact with the measurement sample. Next, the supply of the model gas for the pre-treatment was stopped, N₂ gas was supplied for 30 minutes, and the measurement sample was cooled to 100°C. Next, model gas for CO₂ adsorption shown in Table 2 was supplied such that CO₂ was adsorbed on the measurement sample at 100°C for 10 minutes. Next, purge was performed at 100°C for 10 minutes while supplying model gas for CO₂ desorption shown in Table 2. Next, the model gas for CO₂ desorption shown in Table 2 was supplied to the measurement sample while increasing the temperature from an initial temperature of 100°C to 600°C at a temperature increase rate of 10°C/min. As a result, CO₂ was desorbed from the support (CO₂ desorption). In the CO₂ desorption, until the gas temperature reached 600°C from the start of heating of the model gas for CO₂ desorption, the amount of CO₂ in emitted gas was measured (CO₂ temperature-programmed desorption). FIG. 4 shows the amounts of base sites of the exhaust gas purification catalysts obtained in Examples 1 to 3 and the comparative catalysts obtained in Comparative Examples 1 to 3, the amounts of base sites being obtained based on the amount of carbon dioxide desorbed per 1 g of the support in carbon dioxide temperature-programmed desorption.

**[Table 2]**

| | O₂ (vol%) | CO₂ (vol%) | N₂ | Flow Rate (mL/min) |
|---|---|---|---|---|
| Pre-Treatment | 10 | 0.0 | Balance | 20 |
| CO₂ Adsorption | 0.0 | 1.8 | Balance | 20 |
| CO₂ Desorption | 0.0 | 0.0 | Balance | 20 |

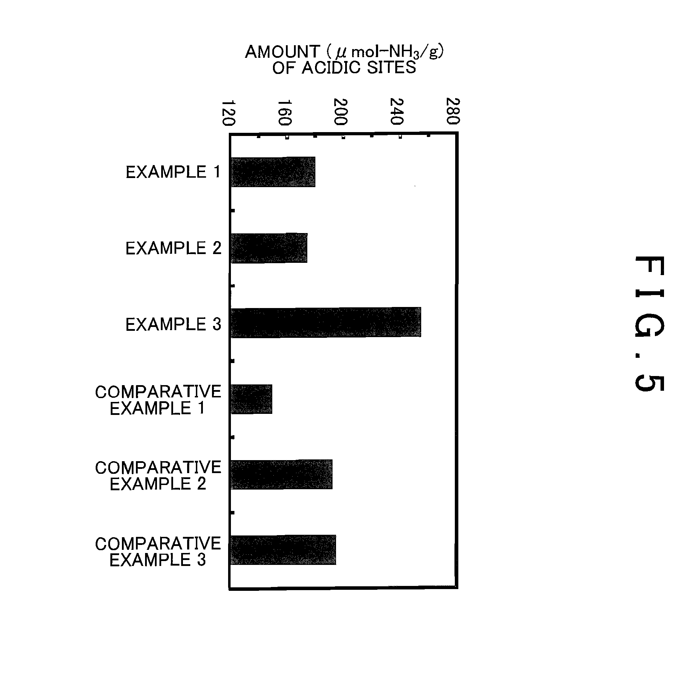

Next, in a method of measuring the amount of acidic sites, first, 1 g of a support was prepared as a measurement sample. Next, as described above, using a temperature-programmed desorption apparatus (TP5000, manufactured by Hemmi Slide Rule Co., Ltd.), the temperature was increased to 600°C at a temperature increase rate of 40°C/min while supplying model gas for the pre-treatment shown in Table 3 to the measurement sample. Next, after the gas temperature reached 600°C, the gas temperature was held at 600°C for 20 minutes while supplying the model gas for the pre-treatment to the measurement sample such that the model gas was brought into contact with the measurement sample. Next, the supply of the model gas for the pre-treatment was stopped, N₂ gas was supplied for 30 minutes, and the measurement sample was cooled to 100°C. Next, model gas for NH₃ adsorption shown in Table 3 was supplied such that NH₃ was adsorbed on the measurement sample at 100°C for 20 minutes. Next, purge was performed at 100°C for 10 minutes while supplying model gas for NH₃ desorption shown in Table 3. Next, the model gas for NH₃ desorption shown in Table 3 was supplied to the measurement sample while increasing the temperature from an initial temperature of 100°C to 600°C at a temperature increase rate of 10°C/min. As a result, NH₃ was desorbed from the support (NH₃ desorption). In the NH₃ desorption, until the gas temperature reached 600°C from the start of heating of the model gas for NH₃ desorption, the amount of NH₃ in emitted gas was measured (NH₃ temperature-programmed desorption). FIG. 5 shows the amounts of acidic sites of the exhaust gas purification catalysts obtained in Examples 1 to 3 and the comparative catalysts obtained in Comparative Examples 1 to 3, the amounts of acidic sites being obtained based on the amount of ammonia desorbed per 1 g of the support in ammonia temperature-programmed desorption.

**[Table 3]**

| | O₂ (vol%) | NH₃ (vol%) | N₂ | Flow Rate (mL/min) |
|---|---|---|---|---|
| Pre-Treatment | 10 | 0.0 | Balance | 20 |
| NH₃ Adsorption | 0.0 | 1.0 | Balance | 20 |
| NH₃ Desorption | 0.0 | 0.0 | Balance | 20 |

As clearly seen from the results shown in FIGS. 4 and 5, it was verified that, in the exhaust gas purification catalysts of Examples 1 to 3, by adjusting the amount of base sites and the amount of acidic sites in the support to be appropriate, the high dispersibility and the metalation of the noble metal (platinum, palladium, and a solid solution thereof) can be simultaneously realized, and higher CO oxidation activity and higher HC oxidation activity can be exhibited.

In general, yttria has higher basicity than alumina. Therefore, it is expected that, the higher the yttria content in the support, the more the amount of base sites. In the exhaust gas purification catalysts of Examples 1 to 3, the yttria content in the support was 2 mass% to 15 mass%; as a result, the amount of base sites was more than that of the comparative catalyst of Comparative Example 1 in which the support did not contain yttria, and the amount of base sites was less than that of the comparative catalyst of Comparative Example 3 in which the yttria content in the support was higher than 15 wt%. On the other hand, in the exhaust gas purification catalysts of Examples 1 to 3, the amount of acidic sites was more than that of the comparative catalyst of Comparative Example 1.

As clearly seen from a comparison of the results of Examples 1 to 3 and the results of Comparative Examples 1 to 3 shown in Table 1 and FIGS. 1 to 5, it was verified that the exhaust gas purification catalysts of Examples 1 to 3 exhibited sufficiently high oxidation activity to CO and HC at a low temperature.

As described above, according to the embodiment of the invention, an exhaust gas purification catalyst can be produced which is capable of exhibiting sufficiently high oxidation activity to CO and HC at a low temperature. In this way, the exhaust gas purification catalyst according to the embodiment of the invention can exhibit sufficiently high oxidation activity to CO and HC at a low temperature. Therefore, by bringing exhaust gas exhausted from an internal combustion engine such as a diesel engine into contact with the exhaust gas purification catalyst according to the embodiment of the invention, CO and HC in the exhaust gas can be sufficiently purified. From this point of view, the exhaust gas purification method according to the embodiment of the invention can be suitably adopted, for example, as a method of purifying CO and HC in exhaust gas exhausted from an internal combustion engine such as a diesel engine. Accordingly, the exhaust gas purification catalyst, the method of producing the same, and the exhaust gas purification method using the same according to the embodiments of the invention are particularly useful, for example, as an exhaust gas purification catalyst for purifying CO and HC in exhaust gas exhausted from an internal combustion engine such as a diesel engine, a method of producing the same, and an exhaust gas purification method using the same, respectively.

## Claims

1. An exhaust gas purification catalyst **characterized by** comprising:
a support formed of alumina and yttria; and
platinum and palladium that are supported on the support, wherein
an yttria content in the support is 2 mass% to 15 mass%,
a content ratio of the platinum to the palladium is in a range of 1 to 10 by mass ratio,
at least a portion of the platinum and at least a portion of the palladium constitute a solid solution, and
a diffraction peak of a (311) plane of a crystal including the platinum, the palladium and the solid solution is present at 81.5° or higher in a range of 81.2° to 82.1°, the diffraction peak being identified by an X-ray diffraction method using CuKα rays.

2. The exhaust gas purification catalyst according to claim 1, wherein
an amount of base sites in the support is 40 µmol-CO₂/g to 120 µmol-CO₂/g, the amount of base sites being obtained based on an amount of carbon dioxide desorbed per 1 g of the support in carbon dioxide temperature-programmed desorption, and
an amount of acidic sites in the support is 150 µmol-NH₃/g or more, the amount of acidic sites being obtained based on an amount of ammonia desorbed per 1 g of the support in ammonia temperature-programmed desorption.

3. The exhaust gas purification catalyst according to claim 1 or 2, wherein
a support amount of the platinum is 0.1 parts by mass to 10 parts by mass in terms of metal with respect to 100 parts by mass of the support, and
a support amount of the palladium is 0.01 parts by mass to 10 parts by mass in terms of metal with respect to 100 parts by mass of the support.

4. The exhaust gas purification catalyst according to any one of claims 1 to 3, wherein
the content ratio of the platinum to the palladium is in a range of 2 to 8 by mass ratio.

5. The exhaust gas purification catalyst according to claim 4, wherein
the content ratio of the platinum to the palladium is in a range of 2 to 4 by mass ratio.

6. The exhaust gas purification catalyst according to any one of claims 1 to 5, wherein
a content ratio of the solid solution to a total amount of the platinum and the palladium is 10 mass% to 90 mass%.

7. A method of producing an exhaust gas purification catalyst, the method **characterized by** comprising:
obtaining a support formed of alumina and yttria using alumina particles and an yttrium salt solution;
supporting platinum and palladium on the support using at least one of a first solution and a combination of a second solution and a third solution, the first solution including a platinum salt and palladium salt, the second solution including a platinum salt, the third solution including a palladium salt; and
firing the support, on which the platinum and the palladium are supported, in a temperature range of 700°C to 1000°C such that the fired support contains 2 mass% to 15 mass% of yttria, and a content ratio of the platinum to the palladium after the firing is in a range of 1 to 10 by mass ratio.

8. The method according to claim 7, wherein
the combination of the second solution and the third solution is used when the platinum and the palladium are supported on the support,
a platinum ion concentration in the second solution is 0.0002 mol/L to 0.04 mol/L, and
a palladium ion concentration in the third solution is 0.0002 mol/L to 0.04 mol/L.

9. An exhaust gas purification method **characterized by** comprising
purifying exhaust gas exhausted from an internal combustion engine by bringing the exhaust gas into contact with the exhaust gas purification catalyst according to any one of claims 1 to 6.
